# FASCICULE DE BREVET EUROPEEN

(11) **EP 0 411 114 B1**
(45) Date de publication et mention de la délivrance du brevet: **27.07.1994**
(21) Numéro de dépôt: 90904362.2
(22) Date de dépôt: 26.02.1990
(51) Int. Cl.: F16D 65/60

(54) **DISPOSITIF DE RATTRAPAGE DE JEU DE CONTROLE POUR FREINS A TAMBOUR DE CAMIONS ET DE SEMI-REMORQUES**
VORRICHTUNG ZUM AUSGLEICH DES STEUERSPIELS AN BREMSTROMMELN BEI LASTKRAFTWAGEN UND ANHÄNGERN
DEVICE FOR COMPENSATING THE CONTROLLED CLEARANCE ON BRAKE DRUMS OF LORRIES AND SEMI-TRAILERS

(30) Priorité: 27.02.1989 FR 8902636
(43) Date de publication de la demande: 06.02.1991
(73) Titulaire: MAMERY, Gaby, F-51300 Blacy (FR)
(72) Inventeur: MAMERY, Gaby, F-51300 Blacy (FR)
(74) Mandataire: Gérardin, Robert Jean René
(86) Numéro de dépôt international: FR9000133
(87) Numéro de publication internationale: WO9010163

(56) Documents cités:
- FR-A- 1 034 548
- FR-A- 1 604 913
- FR-A- 2 224 676
- FR-A- 2 238 090
- FR-A- 2 277 274
- FR-A- 2 389 042
- US-A- 1 992 117
- US-A- 2 664 975

## Description

La présente invention concerne les dispositifs d'actionnement de freins à tambour utilisés principalement sur les camions ou les remorques et a plus particulièrement pour objet un dispositif de rattrapage de jeu entre les garnitures de freins et les tambours.

Sur les dispositifs les plus couramment utilisés, comme celui décrit dans le brevet français **2 277.274**, la came servant à l'écartement des mâchoires de freins est actionnée par l'intermédiaire d'un arbre, d'un levier et d'une tringlerie; on effectue le réglage au moyen d'un système de vis sans fin et d'engrenage hélicoïdal; on procède alors toutes les semaines au réglage.

On connaît, aussi, des dispositifs de rattrapage de jeu automatique, qui mettent continuellement la came en portée contre les mâchoires à chaque actionnement du frein, tels que ceux décrits dans les brevets français **2.389.042** et **2.224.676**. Or, lors de l'utilisation de ces dispositifs, les mâchoires sont tenues contre les tambours pendant une certaine durée, ce qui provoque une usure des garnitures et un échauffement des tambours, ce qui peut, à long terme, provoquer l'éclatement des pneus.

On connaît déjà des dispositifs à rattrapage de jeu correspondant au préambule de la revendication 1 (brevets d'invention français n^{o} **1.604.913** et **2.238.090**). Il s'agit de systèmes à roue et rochet qui assurent, à chaque freinage, une annulation du jeu qui peut alors exister au repos entre les garnitures de freins et les tambours, sans que cela introduise un serrage résiduel. Toutefois, cette remise en contact ne permet pas de retrouver le jeu préconisé par le constructeur pour tenir compte notamment des dilatations consécutives à des freinages prolongés. Or, ces dispositifs, s'ils permettent de conserver aux freins leur efficacité, ne permettent cependant pas, dans le cas ci-dessus évoqué, d'éviter certains blocages de roues préjudiciables à la stabilité du véhicule et à la tenue dans le temps des pneumatiques.

La présente invention vise à remédier aux inconvénients des dispositifs précités et a pour but de proposer un dispositif de rattrapage du jeu, permettant de réduire considérablement l'usure des garnitures et des freins, tout en maintenant en permanence un jeu optimum entre les garnitures et les tambours.

Le dispositif de rattrapage de jeu pour freins à tambour selon l'invention, assurant le rapprochement des sabots de frein par décalage angulaire du bras de manoeuvre par rapport à l'arbre porte-came par l'intermédiaire de cliquets à ressorts solidarisés en déplacement au système de manoeuvre de l'arbre portecame, rappelés contre la périphérie crantée d'une bague intermédiaire emmanchée sur l'extrémité cannelée de l'arbre portecame ; les cliquets étant montés dans leur rainure avec un jeu latéral (J) déterminé en fonction de celui que l'on désire maintenir entre la garniture des sabots de frein et le tambour, après remise en contact de ceux-ci, se caractérise en ce que l'extrémité de la face avant du bec des cliquets ainsi que la face arrière des crans réalisés sur la bague intermédiaire sont réalisées en contre-dépouille, selon des angles alpha et bêta complémentaires, en ce que la remise en contact de la garniture des sabots de frein avec le tambour s'otient par l'intermédiaire d'un dispositif associé venant s'enclencher sur la bague intermédiaire, et en ce que le nombre de cliquets est impair, alors que le nombre de crans est pair, avec différence d'une unité entre le nombre de cliquets et celui des crans.

Selon un premier mode de réalisation de l'invention, le dispositif associé assurant la remise en contact de la garniture des sabots de frein avec le tambour est constitué d'un levier à cliquets juxtaposé au bras de manoeuvre, en prise lui aussi sur la bague intermédiaire par les mêmes moyens, et relié au bras de manoeuvre par l'intermédiaire d'un vérin pneumatique à double effet.

Selon un second mode de réalisation de l'invention, le dispositif associé assurant la remise en contact de la garniture des sabots de frein avec le tambour est constitué d'un linguet flexible mû par un vérin pneumatique à double effet, ledit linguet flexible étant disposé tangentiellement par rapport à la partie crantée réalisée sur la bague intermédiaire de façon à obtenir un engrènement par rapport à celui-ci.

Selon un troisième mode de réalisation de l'invention, le dispositif associé assurant la remise en contact de la garniture des sabots de frein avec le tambour est constitué de deux disques crantés disposés de chaque côté du moyeu du bras de manoeuvre, solidarisés en rotation par rapport à l'arbre de manoeuvre de la came, et d'un levier à rochet articulé librement par rapport au susdit arbre de manoeuvre de la came par l'intermédiaire d'une chape dont les joues viennent enserrer l'ensemble.

Le dispositif comporte, quel que soit le mode de réalisation, un ressort en spirale, enroulé autour de l'arbre relié à l'une de ses extrémités au bras de manoeuvre et à l'autre extrémité audit arbre, ledit ressort se tendant en fonction du réglage effectué.

Le réglage collectif de plusieurs freins par l'intermédiaire d'un dispositif correspondant au premier et au second modes de réalisation s'effectue en une seule manipulation, les poumons de chaque frein étant montés en parallèle avec le poumon principal de freinage, chacun des freins effectuant son rattrapage en fonction de son usure.

Les avantages apportés par l'invention résident principalement en ce que le rattrapage de jeu s'effectue à distance, de façon totalement automatique, dans sa version pneumatique, et en ce que dans toutes ses versions, le rattrapage de jeu s'effectue sans annulation de celui-ci, donc sans risque d'usure anormale des garnitures et d' échauffement des tambours de frein, voire de blocage des roues.

D'autres caractéristiques et avantages apparaîtront dans la description qui va suivre de différentes formes de réalisation de l'invention données a titre d'exemples. non limitatifs, en relation avec les figures des planches annexées sur lesquelles :
- La fig. 1 représente une vue de face du mode de réalisation mettant en oeuvre le bras de manoeuvre lui-même et un levier associé relié au bras par un vérin pneumatique à double effet.
- la fig.2 est une vue en coupe suivant B-B, du dispositif représenté sur la figure précédente.
- La fig.3 est une représentation schématique du vérin pneumatique ou "poumon" utilisé dans le dispositif représenté sur la figure 1.
- La fig.4 représente une vue en perspective d'un cliquet montrant la réalisation en contre-dépouille de son bec d'engrènement.
- la fig. 5 est une vue d'ensemble de face du dispositif selon l'invention dans sa forme de réalisation manuelle.
- la fig.6 est une représentation du bras de manoeuvre équipé de ses cliquets correspondant à la figure précédente.
- La fig.7 représente une vue de dessus du levier à rochet selon la figure 5.
- La fig.8 représente une vue de face du mode de réalisation à rattrapage de jeu par linguet flexible actionné par un vérin solidaire du bras.

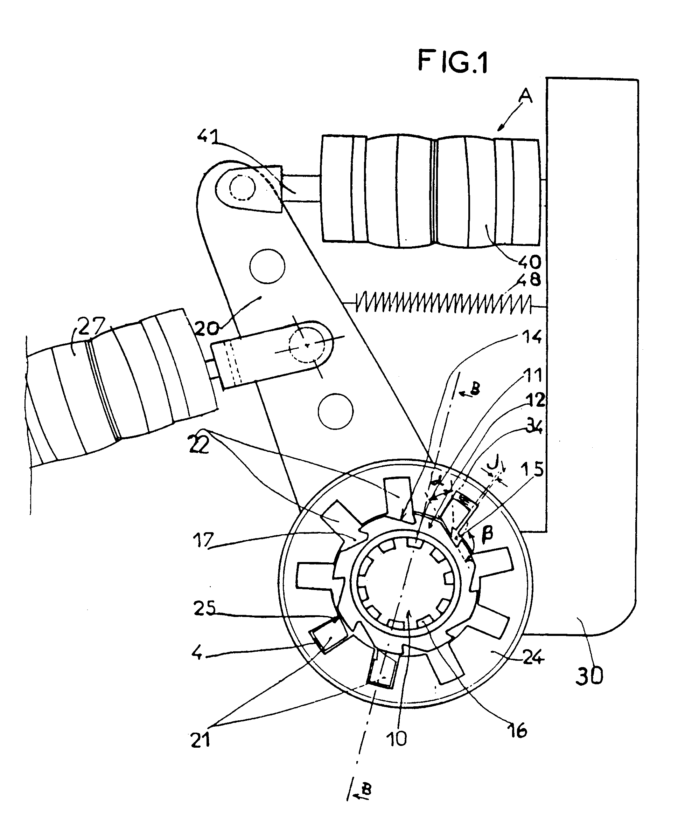

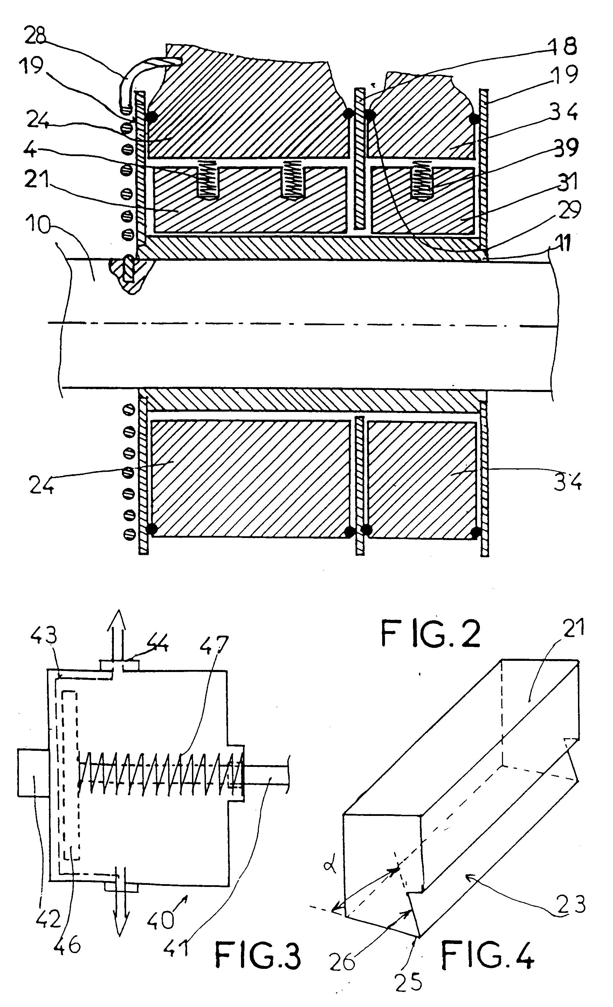

En examinant les figures 1 et 2, on remarque que le dispositif **A** de rattrapage de jeu, situé entre les garnitures de freins et le tambour, est constitué de deux parties ; la première comprend un moyeu **24**, sur la partie extérieure duquel a été fixé le bras **20** de manoeuvre de l'arbre à came **10** et à la périphérie de l'alésage duquel ont été aménagées des rainures **22** destinées à servir de logements à des cliquets **21** ; l'arbre **10** comporte des cannelures à son extrémité opposée à la came. La bague intermédiaire **11** comporte des rainures **16** à la périphérie de son alésage et des crans **14** à sa périphérie extérieure. Les nombres des rainures **22** et des crans **14** ne sont pas limitatifs et sont fonction de la précision que l'on veut donner au rattrapage de jeu ; pour qu'il y ait toujours un "entre-dent" **17** en concordance avec une rainure **22**, quelle que soit la position de l'arbre **10**, il est nécessaire que le nombre de rainures **22** soit supérieur d'une unité au nombre de crans **14** de l'arbre **10**. Ainsi, dans ce mode de réalisation donné à titre d'exemple, le nombre de rainures **22** est de neuf, alors que le nombre de crans **14** est de huit ; la coopération entre les rainures **22** et les crans **14** se fait au moyen des cliquets **21** et des ressorts de rappel **4** ; ces cliquets **21** sont de forme sensiblement parallélépipédique et sont conçus pour coulisser librement dans les rainures **22**; leur longueur étant déterminée pour obtenir un dégagement complet des crans **14** et leur largeur étant quelque peu inférieure à la largeur des rainures **22**, afin de ménager un jeu latéral **J** déterminé en fonction de celui que l'on désire maintenir entre la garniture des sabots de freins et les mâchoires, après élimination de l'excès de jeu ; le bec **25** desdits cliquets **21** présente un angle alpha complémentaire de l'angle bêta présenté par la face avant **15** des crans **14** ; le bec **25** des cliquets **21** prend appui contre la partie crantée **12** de la bague intermédiaire **11** par l'intermédiaire de ressorts **4** placés entre la partie supérieure des cliquets **21** et le fond de leur rainures **22**.

Le dispositif selon ce premier mode de réalisation préférentiel de l'invention comporte, en outre, un deuxième moyen **34**, solidarisé à un levier associé **30** identique au premier, mais d'une épaisseur moitié moindre de celle du moyeu **24** du bras de manoeuvre **20**, de sorte que les cliquets **31** dont il est équipé sont également d'une plus faible épaisseur et leur partie supérieure ne comporte qu'un trou **39** pour loger un ressort **4**, au lieu de deux comme dans le premier moyeu sus-cité **24**.

En position d'utilisation, les moyeux **24**, **34** du bras de manoeuvre **20** et du levier **30** sont montés sur la même bague intermédiaire **11** ; une rondelle entretoise **18** est interposée entre les deux moyeux **24**, **34**, afin d'éviter que les cliquets se contrarient et perturbent le fonctionnement du dispositif en s'insérant, par exemple, dans les logements du moyeu voisin. Dans cette position, un cliquet **21** du premier moyeu **24**, et un cliquet **31** du second moyeu **34** sont chacun dans un "entre-dent" **17** de la bague intermédiaire **11**. Afin de permettre le mouvement relatif des deux moyeux **24**, **34**, par l'intermédiaire de leur bras **20** ou levier **30** respectifs, on a interposé, entre le bras **20** et le levier **30**, un vérin pneumatique à double effet **40**, dit poumon, dont la constitution sera décrite ultérieurment ; son cylindre est fixé au levier associé **30**, alors que sa tige **41** est fixée au bras de manoeuvre **20**.

Lorsqu'on actionne le dispositif de rattrapage de jeu, de l'air comprimé est envoyé vers le poumon **40**, dont la tige **41** se déplace longitudinalement pour écarter angulairement le levier associé **30** du bras de manoeuvre **20**, auquel elle est reliée. L'arbre à came **10** est, alors, entraîné en rotation dans le sens normal de freinage, par l'intermédiaire du moyeu **34** du lever associé **30**, dont l'un des cliquets **31** est enclenché dans l'un des crans **14** situé à la périphérie de la bague intermédiaire **11** solidarisée en rotation à l'extrémité cannelée de l'arbre à came **10** par l'intermédiaire de rainures **16**. La rotation de l'arbre à came **10** se poursuit, ainsi, jusqu'à annulation complète du jeu existant antérieurement entre les sabots de freins et le tambour de freinage. Cette rotation de l'arbre à came **10** a entraîné corrélativement une rotation de la bague intermédiaire **11** dans l'alésage du moyeu **24** du bras de manoeuvre **20**, resté, pendant ce temps, immobile, ce qui a provoqué un déplacement des crans **14** de la bague intermédiaire **11** par rapport aux cliquets **21**, montés dans les rainures **22** réalisées dans ledit moyeu **24**, rappelés contre la bague intermédiaire **11** par des ressorts **4**. Dans l'exemple donné et représenté figure 1, correspondant à neuf cliquets **21** pour huit crans **14**, un cliquet **21** s'engage, ainsi, dans l'un desdits crans **14**, lorsque le décalage angulaire introduit entre le lever associé **30** et le bras **20**, atteint 5°. Compte-tenu, d'une part, que l'arrêt d'actionnement du dispositif s'accompagne d'un rappel du levier associé **30** vers le bras de manoeuvre **20**, sous l'action du ressort **48**, et que, d'autre part, le bec **25** des cliquets **21** et la face avant **23** des crans sont inclinés, selon respectivement un angle alpha et un angle bêta complémentaires, l'engagement complet du bec **25** du cliquet **21** dans un cran **14** s'accompagne de l'introduction d'un jeu entre ledit bec **25** et ledit cran **14**, ce jeu permettant une rotation correspondante de l'arbre porte-came **10** dans le sens inverse, celui du serrage des freins, et un écartement suffisant des sabots de freins de la surface du tambour.

Lors de l'actionnement des freins, par suite de la mise sous pression du poumon **27**, faisant suite au rattrapage de jeu, le bras de manoeuvre **20** s'articule dans le sens du serrage des freins pour annuler, tout d'abord, le jeu subsistant entre le bec **25** du cliquet **21** engagé et le cran **14** correspondant, puis transmettre à la came d'actionnement des mâchoires de freinage un couple suffisant pour communiquer à la roue un effort de freinage suffisant. Dès que la pression d'air est annulée dans le poumon de manoeuvre **27**, un jeu minimum entre sabots de freins et tambour est introduit en correspondance avec le jeu (J) ménagé latéralement entre les cliquets **21** et leurs rainures **22**. Pendant cette opération, le levier associé **30** a été entraîné angulairement par le bras de manoeuvre **20**, afin que, par encliquetage d'un de ses cliquets **31** dans un cran **14** de la bague intermédiaire, il soit, ainsi, remis en condition pour assurer un réglage de jeu ultérieur.

Il est à noter que, dans une forme particulière de réalisation, dans laquelle le moyeu **24** comporte neuf rainures **22** et la bague intermédiaire **11** huit crans **14**, le déplacement angulaire de 5° du bras **20** correspond à l'encliquetage dans un nouveau cran **14**, ce qui provoque une rotation de 5° de l'arbre porte-came **10**.

Pour une meilleure compréhension, il a été représenté, sur la figure 2, une disposition avantageuse du dispositif, dans laquelle deux cliquets **21**, **31** des deux moyeux **24**, **34** en regard par rapport à la rondelle **18** se trouvent dans un même cran **14** de la bague intermédiaire **11**, au même moment.

En outre, un ressort **28** en spirale, enroulé autour de l'arbre **10**, fixé par l'une de ses extrémités au dit arbre **10** et par l'autre extrémité au moyeu **24**, se tend en fonction du réglage effectué et favorise le déplacement des cliquets.

On notera, sur cette figure, la présence de trois rondelles, la fonction de la première **18** ayant déjà été donnée, les deux autres **19**, sont destinées à solidariser longitudinalement l'ensemble par rapport à la bague intermédiaire **11** ; des joints toriques **29**, destinés à assurer l'étanchéité, ont été disposés entre les rondelles **18**, **19** et les moyeux **24**, **34**. On notera également qu'un témoin d'usure de garniture solidaire de l'extrémité de l'arbre **10** pourra être associé au dispositif.

La figure 3 représente un poumon **40** de type connu ; il est de forme sensiblement parallélépipédique, il présente une entrée d'air **42** et sa partie intérieure est constituée d'une membrane souple **43** en plastique, disposée parallèlement à la paroi intérieure du poumon **40** et fixée à celui-ci par des bagues **44** ; lorsque l'air est envoyé dans le poumon **40**, la membrane **43** exerce une pression sur le vase **46** (plastique ou fer), ce qui provoque le déplacement de la tige **41**. Lorsque l'on coupe l'arrivée d'air, le vase **46** revient sur lui-même, ramenant en même temps la tige **41**, et ce à quoi celle-ci est reliée, dans sa position initiale ; un ressort **47** petit être intégré au poumon **40** pour aider le retour de la tige **41** ; ce ressort **47** peut être intégré au poumon **40**, ou bien disposé à l'extérieur ; dans l'invention, celui-ci pourra être disposé entre le lever et le bras (**48** sur la fig. 1).

Sur les figures 1 et 4, on remarquera que les cliquets **21** du premier moyeu présentent, sur la face avant **23** de leur bec **25**, une légère dépouille **26** d'angle alpha par rapport à l'extrémité du cliquet **21**, complémentaire de l'angle bêta formé par les crans de la bague intermédiaire, de façon à éviter un désengagement partiel du cliquet **21** lors du retour en arrière provoqué par le jeu ménage entre les cliquets **21** et les bords de leurs logements, et a introduire un jeu, permettant le retour du cliquet **21** après chaque manipulation, afin de dégager la garniture du tambour et, ainsi, de minimiser l'usure des freins.

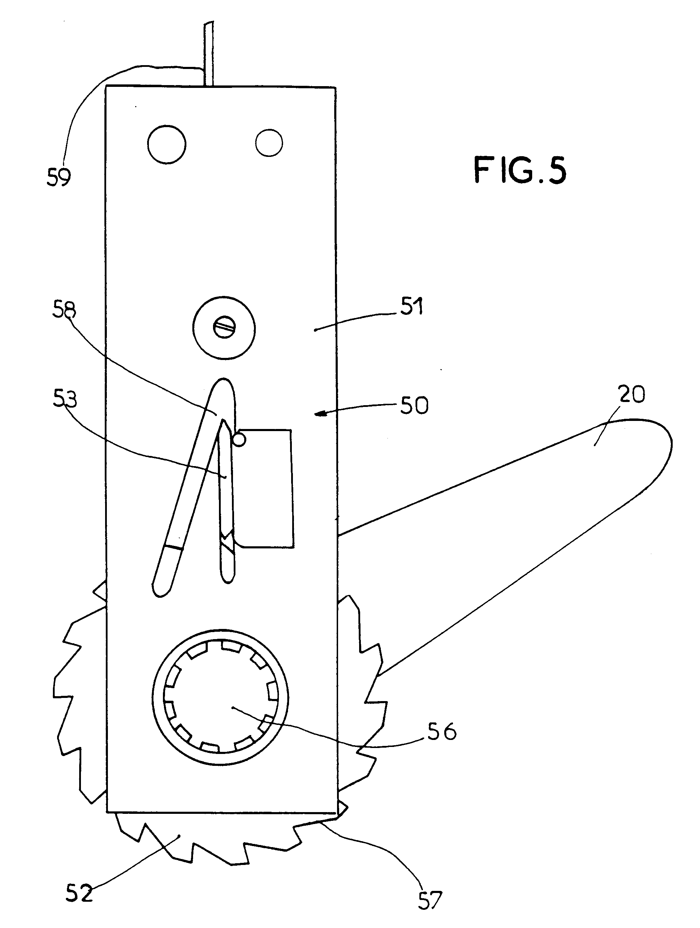

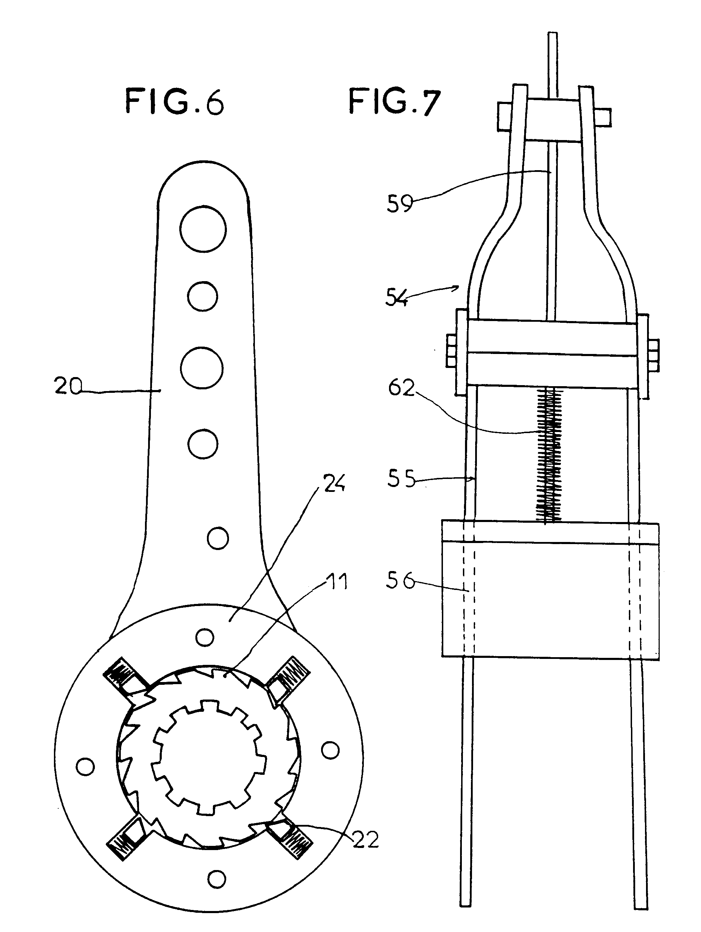

Surles figures 5, 6 et 7, une deuxième forme de réalisation de l'invention est représentée, ayant en commun avec la première forme de réalisation un moyeu **24** muni d'un bras **20**, comportant des rainures **22** réduites au nombre de quatre. Dans cette forme de réalisation, le système de manoeuvre est constitué du bras de manoeuvre **20** lui-même et d'un dispositif de réglage manuel **50** à levier **51** et disque **52** à rochet **53**. Le levier **51** comporte une chape **54** constituée de deux parties rectangulaires **55**, dites joues ; ces joues **55** comportent des orifices **56** destinés au passage de la bague intermédiaire **11**. Ainsi, le moyeu **24** est disposé entre les deux joues **55** autour de la bague intermédiaire **11**, deux disques **52** dentés **57** ayant été soudés sur la bague intermédiaire **11**, de part et d'autre de ce moyeu **24**. Les dents **57** des disques **52** sont destinées à coopérer avec un rochet **53** monté dans une lumière **58** ménagée dans chacune des joues **55**, ledit rochet **53** étant rappelé en permanence vers les disques crantés **52** par une tige **59** et un ressort **62**.

Dans cette forme de réalisation, l'appui est matérialisé par le bras **20**, le rochet **53**, en se logeant entre deux dents **57** du disque denté **52**, entraîne la rotation de la bague intermédiaire **11**, lors de la manoeuvre manuelle du levier de commande **51** du dispositif à roues **52** à rochet **53** jusqu'à rattrapage du jeu ; on peut alors déplacer manuellement le levier **51** dans le sens inverse, sans entraîner, cette fois, la bague intermédiaire **11**, afin de disposer celui-ci pour un rattrapage de jeu ultérieur. Il faut souligner qu'un jeu important pourrait être ainsi annulé progressivement en communiquant des mouvements de rotation alternatifs au levier **51**.

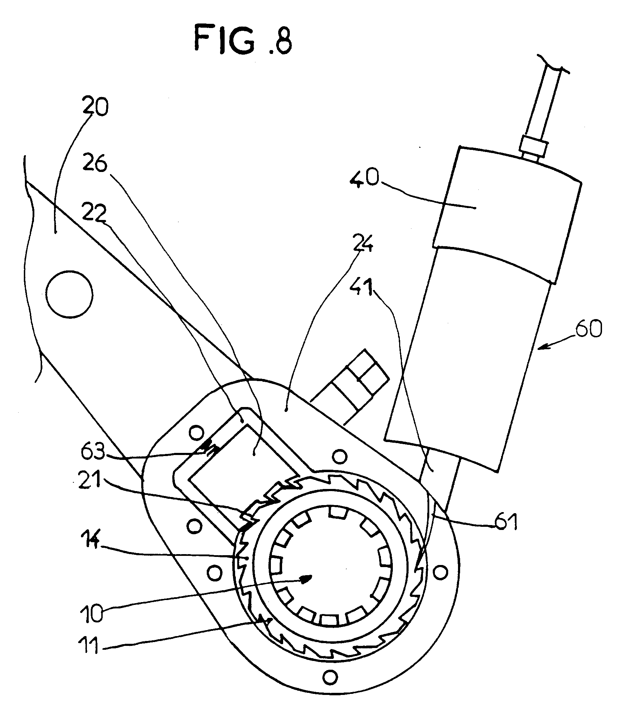

Sur la figure 8, une troisième forme de réalisation est représentée, dans laquelle un dispositif de réglage automatique **60** de jeu, solidaire du moyeu **24** du bras de manoeuvre **20**, permet un réglage direct de la position de l'arbre porte-came **10**. Dans cette forme de réalisation, un poumon **40** agit directement au moyen d'un linguet **61** situé dans le prolongement de sa tige **41**, sur les crans **14** de la bague intermédiaire **11**, pour entrainer celle-ci en rotation jusqu'à annulation du jeu ; le moyeu **24** du bras de manoeuvre **20** conprend une unique rainure **22** permettant le montage et la translation d'une pièce parallélépipédique **26** dont la partie inférieure forme trois cliquets **21** ; un ressort **63** permet la translation de l'ensemble des cliquets **21** dans la rainure **22** et le rappel vers la partie crantée de la bague intermédiaire **11**.

Le dispositif objet de l'invention pourra avantageusement être utilisé sur la plupart des véhicules équipes de freins à tambour, dont la came de commande des mâchoires est manoeuvrée par l'intermédiaire d'un levier, et tout particulièrement sur les camions, remorques et semi-remorques.

Bien que l'on ait décrit et représenté plusieurs formes particulières de réalisation de l'invention, il doit être compris que celle-ci n'est pas limitée à ces formes et à ces moyens, mais qu'elle s'étend à tout dispositif de rattrapage de jeu comportant les caractéristiques générales énoncées dans les revendications annexées.

## Revendications

1. Dispositif de rattrapage de jeu pour trains à tambour assurant le rapprochement des sabots de freins par décalage angulaire du bras de manoeuvre **(20)** par rapport à l'arbre porte-came **(10)** par l'intermédiaire de cliquets **(21)** à ressorts **(4)** solidarisés en déplacement au système de manoeuvre de l'arbre porte-came **(10)**, rappelés contre la périphérie crantée **(12)** d'une bague intermédiaire **(11)** emmanchée sur l'extrémité cannelée de l'arbre porte-came **(10)** ; les cliquets **(21)** étant montés dans leur rainure **(22)** avec un jeu latéral **(J)** déterminé en fonction de celui que l'on désire maintenir entre la garniture des sabots de freins et le tambour, après remise en contact de ceux-ci, caractérisé en ce que l'extrémité de la face avant **(23)** du bec **(25)** des cliquets **(21)**, ainsi que la face avant **(15)** des crans **(14)** réalisés sur la bague intermédiaire **(11)**, sont réalisées en contre-dépouille, selon des angles alpha et bêta complémentaires; en ce que la remise en contact de la garniture des sabots de freins avec le tambour s'obtient par l'intermédiaire d'un dispositif associé venant s'enclencher sur la bague intermédiaire **(11)**, et en ce que le nombre de, cliquets **(21)** est impair alors que le nombre de crans **(14)** est pair, avec différence d'une unité entre le nombre des cliquets **(21)** et celui des crans **(14)**.

2. Dispositif selon la revendication 1, caractérisé en ce que le dispositif associé assurant la remise en contact de la garniture des sabots de freins avec le tambour est constitué d'un levier **(30)** à cliquets, juxtaposé au bras de manoeuvre **(20)**, en prise lui aussi sur la bague intermédiaire **(11)** par les mêmes moyens, et relié au bras de manoeuvre **(20)** par l'intermédiaire d'un vérin pneumatique à double effet **(40)**.

3. Dispositif selon la revendication 1, caractérisé en ce que le dispositif associé **(50)**, assurant la remise en contact de la garniture des sabots de freins avec le tambour, est constitué de deux disques crantés **(52)** disposés de chaque côté du moyeu **(24)** du bras de manoeuvre **(20)**, solidarisés en rotation par rapport à l'arbre de manoeuvre **(10)** de la came, et d'un levier **(51)** à rochet **(53)**, articulé librement par rapport au susdit arbre de manoeuvre **(10)** de la came par l'intermédiaire d'une chape **(54)** dont les joues **(55)** viennent enserrer l'ensemble.

4. Dispositif selon la revendication 1, caractérisé en ce que le dispositif associé **(60)** assurant la remise en contact de la garniture des sabots de freins avec le tambour est constitué d'un linguet flexible **(61)** mû par un vérin pneumatique à double effet **(40)**, ledit linguet flexible **(61)** étant disposé tangentiellement par rapport à a partie crantée **(12)** réalisée sur la bague intermédiaire **(11)** de façon à obtenir un engrènement par rapport à celui-ci.

5. Dispositif selon l'une quelconque des revendications précédentes, caractérisé en ce qu'il comporte un ressort en spirale **(28)**, enroulé autour de l'arbre **(10)** relié par l'une de ses extrémités au moyeu **(24)** et par l'autre extrémité au dit arbre **(10)**, ledit ressort **(28)** se tendant en fonction du réglage effectué.

6. Dispositif selon l'une quelconque des revendications 1,2 ou 4, caractérisé en ce que le réglage collectif de plusieurs freins s'effectue par une seule manipulation, les poumons de chaque frein étant montés en parallèle avec le poumon principal de freinage, chacun des freins effectuant son rattrapage en fonction de son usure.

## Claims

1. Wear take-up device for drum brakes which ensures that the brake shoes are drawn together by the angular displacement of operating arm (20) in relation to camshaft (10) by means of pawls (21) with springs (4) integral in movement with the operating system of camshaft (10) and drawn back against the notched circumference (12) of an intermediate ring (11) fitted onto the splined end of camshaft (10); pawls (21) being mounted in their grooves (22) with a side clearance (J) calculated on the basis of the desired clearance to be maintained between the drum and the brake shoe linings, after the latter having resumed contact, characterised in that the end of front face (23) of tip (25) of pawls (21), as well as front face (15) of notches (14) on intermediate ring (11), are undercut, at complementary angles alpha and beta; in that the brake linings are made to resume contact with the drum by means of an associated device which engages with intermediate ring (11), and in that the number of pawls (21) is odd whereas the number of notches (14) is even, with a difference of one unit between the number of pawls (21) and the number of notches (14).

2. A device according to Claim 1, characterised in that the associated device which ensures that the brake linings resume contact with the drum comprises a pawl lever (30), juxtaposed to operating arm (20), also engaging with intermediate ring (11) by the same means, and linked to operating arm (20) by means of a double-acting pneumatic jack (40).

3. A device according to Claim 1, characterised in that associated device (50), which ensures that the brake shoe linings resume contact with the drum, comprises two notched discs (52) mounted either side of boss (24) of operating arm (20) integral in rotation with cam operating shaft (10), and a lever (51) with a ratchet (53), articulated freely in relation to the above-mentioned cam operating shaft (10) by means of a cover (54) the sides (55) of which encompass the assembly.

4. A device according to Claim 1, characterised in that associated device (60) which ensures that the brake shoe linings resume contact with the drum comprises a flexible catch (61) actuated by a double-acting pneumatic jack (40), the said flexible catch (61) being arranged tangentially in relation to the notched part (12) on intermediate ring (11) so as to engage with the latter.

5. A device according to any one of the preceding Claims, characterised in that it comprises a spiral spring (28), coiled round shaft (10) linked at one of its ends to boss (24) and at the other end to the said shaft (10), the said spring (28) stretching to suit the adjustment made.

6. A device according to any one of Claims 1, 2 or 4, characterised in that the collective adjustment of several brakes is performed in a single operation, the cylinders of each brake being mounted in parallel with the master braking cylinder, each of the brakes being taken up according to the extent of its wear.

## Patentansprüche

1. Vorrichtung zum Ausgleich des Spiels an Bremstrommeln, die das Zustellen der Bremsklötze durch Winkelverschiebung des Steuerarms (20) zur Nockenwelle (10) über federnde (4) Klinken (21) gewährleistet, die beim Verschieben mit dem Steuersystem der Nockenwelle (10) fest verbunden sind und an die gerastete Umfangslinie (12) eines Zwischenrings (11) rückgeholt werden, der auf dem gerieften Ende der Nockenwelle (10) sitzt, wobei die Klinken (21) in ihrer Rille (22) mit einem seitlichen Spiel (J) montiert sind, das in Abhängigkeit von demjenigen bestimmt wird, das zwischen den Bremsbelägen und der Bremstrommel gehalten werden soll, nachdem diese in Kontakt gebracht wurden,
dadurch gekennzeichnet, daß das Ende der Vorderseite (23) des Zahns (25) der Klinken (21) sowie die Vorderseite (15) der Rastkerben (14) an dem Zwischenring (11) in Hinterschneidung mit den sich ergänzenden Winkeln Alpha und Beta ausgeführt sind, daß das In-Kontakt-Bringen der Bremsbeläge mit der Bremstrommel über eine angebaute Vorrichtung erfolgt, die an dem Zwischenring (11) in Eingriff kommt, und daß die Anzahl der Klinken (21) ungerade ist, während die Anzahl der Rastkerben (14) gerade ist und eine Differenz von eins zwischen der Anzahl der Klinken (21) und der der Rastkerben (14) besteht.

2. Vorrichtung nach Anspruch 1,
dadurch gekennzeichnet, daß die angebaute Vorrichtung zum In-Kontakt-Bringen der Bremsbeläge mit der Bremstrommel aus einem Hebel (30) mit Rastklinken besteht, der sich neben dem Steuerarm (20) befindet und seinerseits durch die gleichen Mittel auf dem Zwischenring (11) in Eingriff ist und mit dem Steuerarm (20) über einen doppeltwirkenden Pneumatikzylinder (40) verbunden ist.

3. Vorrichtung nach Anspruch 1,
dadurch gekennzeichnet, daß die angebaute Vorrichtung (50) zum In-Kontakt-Bringen der Bremsbeläge mit der Bremstrommel aus zwei gerasteten Scheiben (52) , die zu beiden Seiten der Nabe (24) des Steuerarms (20) angeordnet sind und drehfest mit der Nockensteuerwelle (10) verbunden sind, und aus einem Hebel (51) mit Klinkwerk (53), der über einen Gabelbügel (54), dessen Backen (55) die Gesamtanordnung zusammenhalten, frei schwenkbar zu der obengenannten Nockensteuerwelle (10) befestigt ist, besteht.

4. Vorrichtung nach Anspruch 1,
dadurch gekennzeichnet, daß die angebaute Vorrichtung (60) zum In-Kontakt-Bringen der Bremsbeläge mit der Bremstrommel aus einem beweglichen Kontakt (61) besteht, der durch einen doppeltwirkenden Pneumatikzylinder (40) bewegt wird, wobei der genannte bewegliche Kontakt (61) tangential zu dem an dem Zwischenring (11) ausgeführten gerasteten Teil (12) dergestalt angeordnet ist, daß ein Eingriff mit diesem erzielt wird.

5. Vorrichtung nach einem der vorhergehenden Ansprüche,
dadurch gekennzeichnet, daß sie eine Spiralfeder (28) aufweist, die um die Welle (10) herum geführt ist und mit einem ihrer Enden an der Nabe (24) und mit dem anderen Ende an der genannten Welle (10) befestigt ist, wobei die genannte Feder (28) sich abhängig von der durchgeführten Einstellung spannt.

6. Vorrichtung nach einem der vorhergehenden Ansprüche 1, 2 oder 4 dadurch gekennzeichnet, daß das gemeinsame Einstellen mehrerer Bremsen durch einen einzigen Vorgang erfolgt, da die Luftspeicher jeder Bremse parallel mit dem Hauptbremsluftspeicher eingebaut sind, wobei jede Bremse ihr Spiel abhängig von ihrer Abnutzung ausgleicht.
